# EUROPEAN PATENT APPLICATION

(11) **EP 3 708 536 A1**
(43) Date of publication of application: **16.09.2020**
(21) Application number: 19217417.5
(22) Date of filing: 18.12.2019
(51) Int. Cl.: C01B 25/08, C09K 11/08

(54) **MANGANESE-DOPED INZNP QUANTUM DOT AND MANUFACTURING METHOD THEREOF**

(30) Priority: 11.03.2019 KR 20190027287
(71) Applicant: Korea Electronics Technology Institute, Bundang-gu, Seongnam-si Gyeonggi-do 13509 (KR)
(72) Inventor: HAN, Chuljong, 16807 Gyeonggi-do (KR); KIM, Jiyong, 31166 Chungcheongnam-do (KR); PARK, Kyoungwon, 05658 Seoul (KR)
(74) Representative: Isarpatent

(57) **Abstract**

The present disclosure provides a manganese-doped InZnP quantum dot having high reproducibility and exhibiting superior optical efficiency, and a method of manufacturing the quantum dot. According to an aspect of an exemplary embodiment, the manganese-doped InZnP quantum dot is of manufactured by synthesizing an InZnP quantum dot by reacting indium acetate, zinc acetate, and tris(trimethylsilyl)phosphine; and then doping the InZnP quantum dot with manganese.

## Description

### CROSS-REFERENCE TO RELATED APPLICATION

The present application claims the benefit of priority to Korean Patent Application No. 10-2019-0027287, filed on March 11, 2019, in the Korean Intellectual Property Office, the disclosure of which is incorporated herein in its entirety by reference.

### TECHNICAL FIELD

The present disclosure relates to a quantum dot and, more particularly, to a manganese-doped InZnP quantum dot having high reproducibility and exhibiting superior optical efficiency. Also, the present disclosure relates to a method of manufacturing the quantum dot.

### BACKGROUND

A quantum dot is a semiconductor crystalline material having a size of several nanometers and being composed of hundreds to thousands of atoms. Such a small-sized material, in which a surface area per unit volume is large and most of the atoms are present on or near its surface, exhibits a quantum confinement effect and has electronic, magnetic, optical, chemical, and mechanical properties different from those of a bulk semiconductor material.

Impurities contained in the quantum dot may strongly change the electronic, optical, and magnetic properties of the semiconductor. Such impurities may be added to the quantum dot by doping. A quantum dot added with the impurities is referred to as a 'doped quantum dot' hereinafter. The doped quantum dot used in a solar cell or a luminescent solar concentrator (LSC) which requires a long-lasting light source transports electrons excitated by absorbed energy more faster and efficiently to the impurities and quickly forms excitons so as to suppress photo-oxidative degradation or photodecomposition resulting from an interference at surface energy levels and improve the stability. See Narayan Pradhan et al., J. Am. Chem. Soc., 127: 17586-17587, 2005.

Doped quantum dots have wider stroke shifts compared with non-doped II-VI or III-V quantum dots and thus have an advantage of suppressing self-quenching due to self-absorption.

The II-VI quantum dots contain cadmium (Cd) or selenium (Se), which may cause serious problems in terms of environmental hazards and toxicity, and may have a harmful effect on a human body when used in biotechnical fields. For this reason, many researches are being made recently on the III-V quantum dots that can replace the II-VI quantum dots.

Indium phosphide (InP) quantum dot, which is one of the most typical III-V quantum dots, has a wide emission range emission from visible light to near-infrared range and has been actively studied due to its advantages of non-toxicity compared with the II-VI quantum dots, an emission range similar to that of cadmium selenide (CdSe) quantum dot, and a good emission efficiency.

The InP quantum dot, however exhibits a slightly lower emission efficiency and a relatively wider full width at half maximum (FWHM) compared with the CdSe-based quantum dots. Further, the InP quantum dot has a problem of poor reproducibility arising from a more complicated manufacturing process than the CdSe quantum dots.

### SUMMARY

One object of the present disclosure is to provide a manganese-doped indium zinc phosphide (InZnP) quantum dot having high reproducibility and exhibiting superior optical efficiency, and a method of manufacturing the quantum dot.

Another object of the present disclosure is to provide a manganese-doped InZnP quantum dot having a wide stroke shift and a method of manufacturing the quantum dot.

Yet another object of the present disclosure is to provide a manganese-doped InZnP quantum dot having a reduced full width at half maximum (FWHM) and an improved quantum efficiency and a method of manufacturing the quantum dot.

Additional aspects will be set forth in part in the description which follows and, in part, will be apparent from the description, or may be learned by practice of the presented exemplary embodiments.

According to an aspect of an exemplary embodiment, provided is a manganese-doped InZnP quantum dot comprising an InZnP quantum dot synthesized by a reaction of indium acetate, zinc acetate, and tris(trimethylsilyl)phosphine. The manganese-doped InZnP quantum is provided by doping the InZnP quantum dot with manganese to increase an optical efficiency.

A doping ratio of manganese to the InZnP quantum dot may be 0.1-20 wt%.

A stroke shift of the manganese-doped InZnP quantum dot may be wider than a undoped InZnP quantum dot.

A photoluminescence peak wavelength of the manganese-doped InZnP quantum dot may be larger than a undoped InZnP quantum dot.

A full width at half maximum (FWHM) of the manganese-doped InZnP quantum dot may be smaller than a undoped InZnP quantum dot.

The InZnP quantum dot may be synthesized by: putting indium acetate and zinc acetate into a reactor and heating the reactor, and injecting a mixture of tris(trimethylsilyl)phosphine and 1-octadecene into the reactor.

The InZnP quantum dot may be doped with manganese by injecting manganese oleate into a reactor containing the InZnP quantum dot by one-pot reaction, gradually increasing a temperature, and maintaining the temperature for a predetermined time period to enhance a reproducibility of the manganese-doped InZnP quantum dot.

According to an aspect of an exemplary embodiment, provided is a method of manufacturing manganese-doped InZnP quantum dot, comprising: synthesizing an InZnP quantum dot by reacting indium acetate, zinc acetate, and tris(trimethylsilyl)phosphine; and doping the InZnP quantum dot with manganese.

The synthesizing of the InZnP quantum dot may include: putting indium acetate and zinc acetate into a reactor and heating the reactor; and injecting a mixture of tris(trimethylsilyl)phosphine and 1-octadecene into the reactor to synthesize the manganese-doped InZnP quantum dot.

The synthesizing of the InZnP quantum dot may include: putting indium acetate, zinc acetate, and oleic acid into a reactor and heating the reactor under a vacuum condition; injecting 1-octadecene into the reactor and heating the reactor; changing an atmosphere of the reactor into nitrogen and heating the reactor; and injecting the mixture of tris(trimethylsilyl)phosphine and 1-octadecene into the reactor.

The doping of the InZnP quantum dot with manganese may include: adding manganese oleate to the InZnP quantum dot by one-pot reaction; and changing a temperature condition to increase a reproducibility of the doping.

During the doping of the InZnP quantum dot with manganese, the temperature may be increased gradually and then maintained for a predetermined time period.

According to the present disclosure, the manganese-doped InZnP quantum dot having high reproducibility and exhibiting superior optical efficiency can be manufactured by synthesizing an InZnP quantum dot by reacting indium acetate, zinc acetate, and tris(trimethylsilyl)phosphine, and doping the InZnP quantum dot with manganese.

The manganese-doped InZnP quantum dot according to the present disclosure, in which manganese is doped in the InZnP quantum, reveals a stroke shift wider than a undoped InZnP quantum dot.

The manganese-doped InZnP quantum dot according to the present disclosure reveals a reduced full width at half maximum (FWHM) and an improved quantum efficiency compared with the undoped InZnP quantum dot.

Further areas of applicability will become apparent from the description provided herein. It should be understood that the description and specific examples are intended for purposes of illustration only and are not intended to limit the scope of the present disclosure.

### BRIEF DESCRIPTION OF THE DRAWINGS

In order that the disclosure may be well understood, there will now be described various forms thereof, given by way of example, reference being made to the accompanying drawings, in which:
FIG. 1 is a flowchart illustrating a method of manufacturing a manganese-doped InZnP quantum dot according to the present disclosure;
FIG. 2 is a detailed flowchart illustrating a step of synthesizing an InZnP quantum dot shown in FIG. 1;
FIG. 3 is a detailed flowchart illustrating a step of doping manganese shown in FIG. 1;
FIG. 4 is a graph illustrating changes in a PL peak and a FWHM of undoped InZnP quantum dots according to Comparative Examples obtained during manufacturing stages of the InZnP quantum dots;
FIG. 5 is a graph illustrating changes in a PL peak and a FWHM of manganese-doped InZnP quantum dots according to Examples of the present disclosure obtained during manufacturing stages of the manganese-doped InZnP quantum dots;
FIG. 6 is a graph illustrating the PL peaks of the InZnP quantum dots according to the Examples and a Comparative Example obtained during manufacturing stages of the InZnP quantum dots;
FIG. 7 is a graph illustrating ultraviolet absorptions of the InZnP quantum dots according to the Examples and a Comparative Example obtained during manufacturing stages of the InZnP quantum dots;
FIG. 8 is a graph illustrating a stroke shift of the undoped InZnP quantum dot according to the Comparative Example;
FIG. 9 is a graph illustrating a stroke shift of the manganese-doped InZnP quantum dot according to the Example; and
FIG. 10 is a graph illustrating PL decay curves of the manganese-doped InZnP quantum dots according to the Examples.

The drawings described herein are for illustration purposes only and are not intended to limit the scope of the present disclosure in any way.

### DETAILED DESCRIPTION

In the following description and the accompanied drawings, only parts necessary for understanding embodiments of the present disclosure will be described, and detailed descriptions of well-known functions or configuration that may obscure the subject matter of the present disclosure will be omitted for simplicity.

The terms and words used in the following description and appended claims are not necessarily to be construed in an ordinary sense or a dictionary meaning, and may be appropriately defined herein to be used as terms for describing the present disclosure in the best way possible. Such terms and words should be construed as meaning and concept consistent with the technical idea of the present disclosure. The embodiments described in this specification and the configurations shown in the drawings are merely preferred embodiments of the present disclosure and are not intended to limit the technical idea of the present disclosure. Therefore, it should be understood that there may exist various equivalents and modifications which may substitute the exemplary embodiments at the time of filing of the present application.

Exemplary embodiments of the present disclosure will now be described in detail with reference to the accompanied drawings.

A manganese-doped InZnP quantum dot according to the present disclosure is formed by doping manganese in a undoped InZnP quantum dot. That is, the manganese-doped InZnP quantum dot according to the present disclosure can be manufactured by synthesizing an InZnP quantum dot by reacting indium acetate, zinc acetate, and tris(trimethylsilyl)phosphine, and doping the InZnP quantum dot with manganese. The manganese-doped InZnP quantum dot includes manganese ions (Mn²⁺). The manganese-doped InZnP quantum dot may be denoted by "Mn:InZnP".

The diameter of the InZnP quantum dot may be in a range of 2-20 nanometers (nm). A full width at half maximum (FWHM) of the InZnP quantum dot depends on the diameter of the InZnP quantum dot. As the diameter of the InZnP quantum dot is smaller, the InZnP quantum dot emits light of a shorter wavelength. As the diameter of the InZnP quantum dot is larger, the InZnP quantum dot emits light of a longer wavelength. In the case that the diameter of the InZnP quantum dot is 2 nm or less, a surface-to-volume ratio of the quantum dot is large and an influence of defects on properties of the quantum dot increases. On the contrary, in the case that the diameter of the InZnP quantum dot is 20 nm or more, the properties of the quantum dot disappear and material reveals properties of a bulk material.

A doping ratio of manganese to the InZnP quantum dot may be in a range of 0.1-20 wt%. When the doping ratio of manganese is 0.1 wt% or less, it is difficult to observe an increase in a stroke shift arising from the doping of manganese. On the contrary, when the doping ratio of manganese is 20 wt% or more, an excessive doping may cause a problem of increasing defect emission. Moreover, it is technically difficult to dope more than 20 wt% of manganese.

The manganese-doped InZnP quantum dot according to the present disclosure reveals a stroke shift wider than a undoped InZnP quantum dot. The stroke shift of the manganese-doped InZnP quantum dot may be 400-650 meV, for example.

The manganese-doped InZnP quantum dot according to the present disclosure reveals a reduced full width at half maximum (FWHM) while the stroke shift is widened. The full width at half maximum of the manganese-doped InZnP quantum dot may be 50-120 nm, for example.

The manganese-doped InZnP quantum dot according to the present disclosure exhibits a longer photoluminescence (PL) peak wavelength than the undoped InZnP quantum dot. That is, the PL peak of the manganese-doped InZnP quantum dot is red shifted.

The manganese-doped InZnP quantum dot according to the present disclosure has an enhanced quantum yield. The quantum yield of the manganese-doped InZnP quantum dot may be 5-80 %.

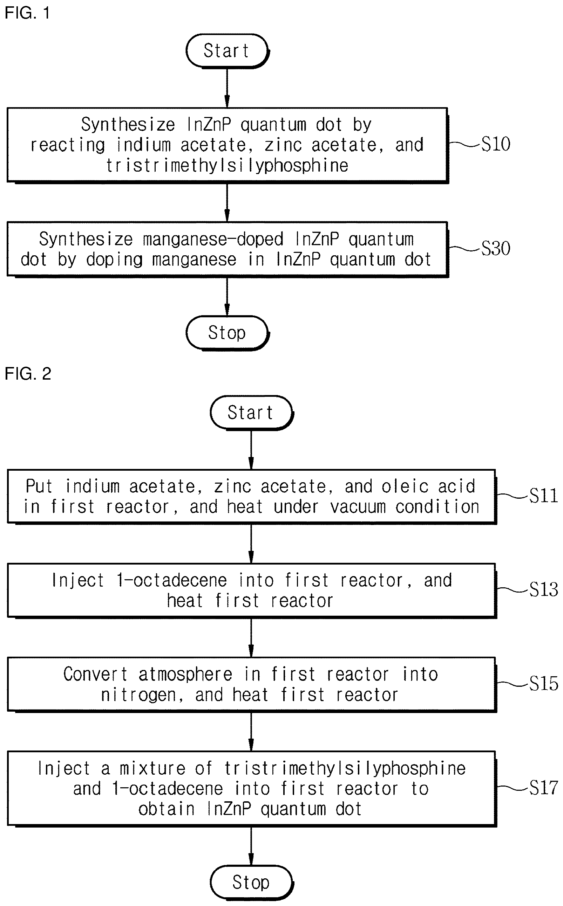

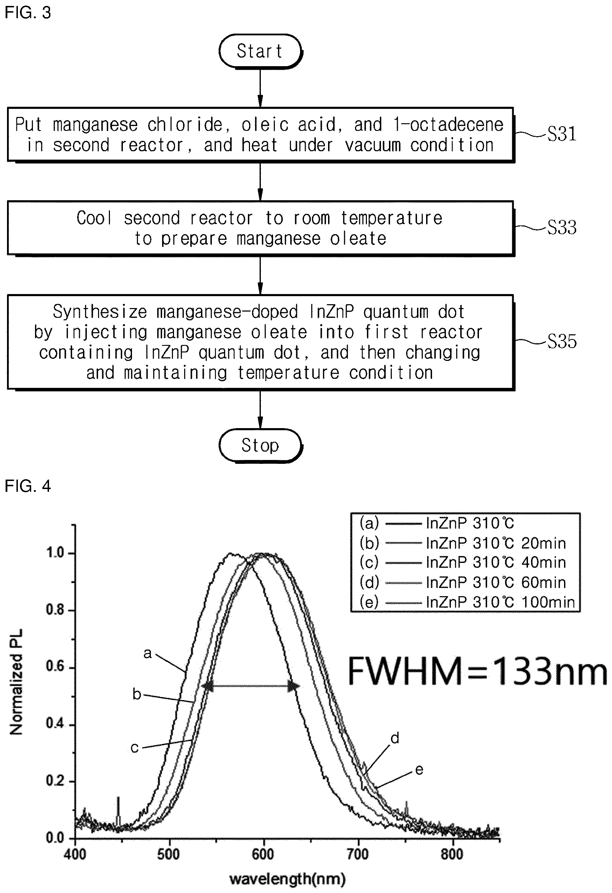

The manganese-doped InZnP quantum dot according to the present disclosure can be manufactured by a process illustrated in FIGS. 1-3. FIG. 1 is a flowchart illustrating a method of manufacturing the manganese-doped InZnP quantum dot according to the present disclosure. FIG. 2 is a detailed flowchart illustrating a step of synthesizing the InZnP quantum dot shown in FIG. 1. FIG. 3 is a detailed flowchart illustrating a step of doping manganese shown in FIG. 1.

The method of manufacturing the manganese-doped InZnP quantum dot according to the present disclosure includes a step of synthesizing the InZnP quantum dot (S10) and a step of doping manganese in the InZnP quantum dot (S30).

Here, the step S10 may be performed by a hot injection method. That is, the InZnP quantum dot may be synthesized by reacting indium acetate, zinc acetate, and tris(trimethylsilyl)phosphine in the step S10.

The step of synthesizing the InZnP quantum dot according to the step S10 will be described in detail with reference to FIG. 2.

In step S11, indium acetate, zinc acetate, and oleic acid are put in a first reactor and heated under a vacuum condition. For example, the step S11 may be performed at 110-150 °C for 1-3 hours.

In step S13, 1-octadecene is injected into the first reactor and heated. First, the temperature of the first reactor is lowered from the temperature in the step S11 and 1-octadecene is injected into the first reactor, and then the first reactor is heated again to a temperature level around the temperature in the step S11. For example, the temperature of the first reactor may be lowered to 30-70 °C before 1-octadecene is injected. After injecting 1-octadecene, the temperature of the first reactor may be heated to 110-150 °C and maintained for 0.5-2 hours.

In step S15, an atmosphere in the first reactor is changed into nitrogen, and then the first reactor is heated. At this time, the first reactor may be heated to and maintained at a target temperature at which the InZnP quantum dot may be manufactured. The step S15 may be performed at 250-350 °C for 3-10 minutes, for example.

In step S17, a mixture of tris(trimethylsilyl)phosphine and 1-octadecene may be injected into the first reactor and the first reactor is heated to obtain the InZnP quantum dot. At this time, the first reactor be maintained at a temperature being the same as the temperature in the step S15. The step S17 may be performed at 250-350 °C for 1-2 hours, for example.

The step S30 of doping manganese in the InZnP quantum dot in FIG. 1 may be performed by one-pot reaction, which will now be described with reference to FIG. 3.

In step S31, manganese chloride, oleic acid, and 1-octadecene are put in a second reactor and heated under the vacuum condition. The step S31 may be performed at 120-140 °C for 1-3 hours, for example.

In step S33, the second reactor may be cooled to room temperature to prepare manganese oleate.

In step S35, the manganese-doped InZnP quantum dot is synthesized by injecting the manganese oleate into the first reactor containing the InZnP quantum dot and then changing the temperature condition to increase the reproducibility of manganese doping. At this step, the temperature may be increased gradually, and then the temperature condition may be maintained for a predetermined time period. In other words, the manganese oleate prepared in the step 33 and contained in the second reactor is taken and injected into the first reactor containing the InZnP quantum dot synthesized in the step S17, and then the temperature is gradually increased to a target temperature for synthesizing the manganese-doped InZnP quantum dot, which temperature is maintained for a certain time period. The target temperature may be determined in a range of 250-350 °C, for example. The rate of temperature increase to the target temperature may be determined in a range of 2-5 °C/min. The synthesis of the manganese-doped InZnP quantum dot may be performed for 1-2 hours after the target temperature is reached.

The present disclosure enables to manufacture the manganese-doped InZnP quantum dot having high reproducibility and optical efficiency by synthesizing the InZnP quantum dot by reacting indium acetate, zinc acetate, and tris(trimethylsilyl)phosphine, and then doping the synthesized InZnP quantum dot with manganese.

### [Examples and Comparative Examples]

Quantum dots according to following examples and comparative examples were prepared in order to check the properties of the manganese-doped InZnP quantum dot including stroke shift, full width at half maximum (FWHM), and quantum yield. Flasks may be used for the first reactor for preparing InZnP quantum dot and the second reactor for preparing the manganese stock solution.

### Synthesis of InZnP Quantum Dots

First, 1 mmol of indium acetate, 1 mmol of zinc acetate, and 2 ml of oleic acid are put in a first reactor and heated at 130 °C for 2 hours under the vacuum condition.

After heating, the temperature of the first reactor is lowered to 50 °C, 15 ml of 1-octadecene is injected into the first reactor, and then the first reactor is heated to 120 °C for 1 hour. Then, the atmosphere in the first reactor is changed into nitrogen, and then the first reactor is heated to 310 °C and this temperature is maintained for 5 minutes.

Subsequently, a mixture of 1 mmol of tris(trimethylsilyl)phosphine and 9 ml of 1-octadecene is prepared, and the mixture is rapidly injected into the first reactor to allow a reaction of synthesizing the InZnP quantum dot to occur for 100 minutes.

The InZnP quantum dot synthesized as above is used as an InZnP quantum dot of a comparative example. That is, the quantum dot of the comparative example is a undoped InZnP quantum dot.

### Synthesis of Manganese-doped InZnP Quantum Dots

First, 5 mmol of manganese chloride, 3 ml of oleic acid, and 10 ml of 1-octadecene are mixed and placed in a 100 ml second reactor, and the second reactor is heated at 130 °C under the vacuum condition for 2 hours.

After heating, the second reactor is cooled to the room temperature to prepare a 0.5M manganese oleate solution.

Next, 2 ml (1 mmol) of the 0.5M manganese oleic acid solution is taken from the second reactor and injected into the first reactor containing the synthesized InZnP quantum dot for the one-pot reaction.

After the temperature of the first reactor is gradually increased to 310 °C, the temperature of the first reactor is maintained for 60 minutes so that the manganese-doped InZnP quantum dot according to an example of the present disclosure is synthesized.

### Comparison of Properties

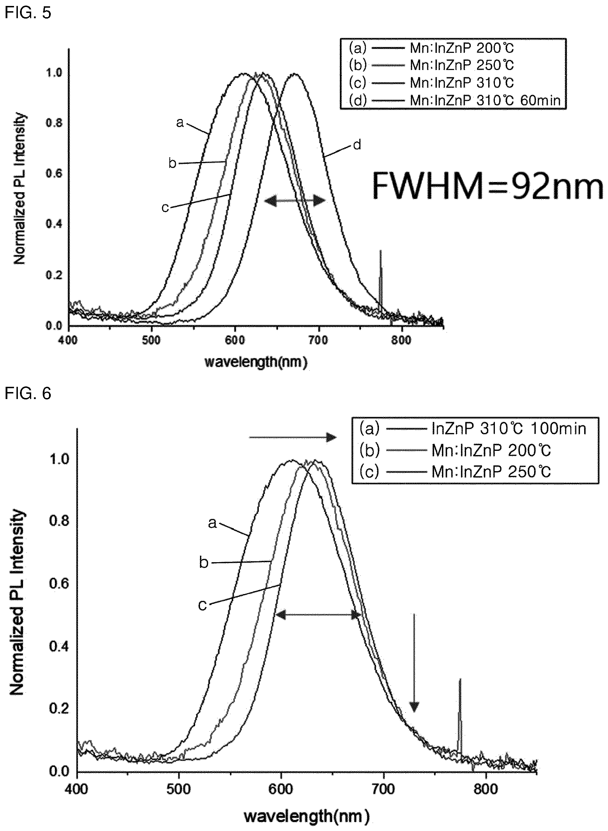

Changes in a photoluminescence (PL) peak and a full width at half maximum (FWHM) half width of the quantum dots according to the Comparative Examples and the Examples are illustrated in FIGS. 4 and 5. FIG. 4 is a graph illustrating the changes in the PL peak and the FWHM of the undoped InZnP quantum dots according to the Comparative Examples obtained during manufacturing stages of the InZnP quantum dots. FIG. 5 is a graph illustrating the changes in the PL peak and the FWHM of the manganese-doped InZnP quantum dots according to the Examples of the present disclosure obtained during manufacturing stages of the manganese-doped InZnP quantum dots.

The quantum dots of the Comparative Examples used to derive the graph of FIG. 4 were taken during the process of manufacturing the quantum dots using a hot injection method. The manganese-doped InZnP quantum dots of the Examples used to derive the graph of FIG. 5 were taken during the process of doping manganese by the one-pot reaction.

The PL spectra were measured for the quantum dots of the Comparative Examples and the Examples taken during the process of manufacturing the quantum dots. The undoped InZnP quantum dots of the Comparative Examples were taken at 0, 20, 40, 60 and 100 minutes from the instant that the mixture of tris(trimethylsilyl)phosphine and 1-octadecene is rapidly injected into the first reactor to allow the reaction of synthesizing the InZnP quantum dot to occur at 310 °C.

The manganese-doped InZnP quantum dots of the Examples were taken when the temperature of the first reactor, which was increased gradually after the addition of the manganese oleic acid solution to the InZnP quantum dot for the one-pot reaction, reached 200 °C, 250 °C, and 310 °C, and after 60 minutes since the temperature reached 310 °C.

It is observed that the PL peaks of the manganese-doped InZnP quantum dots of the Examples is red shifted compared with the undoped InZnP quantum dot of the Comparative Example. The red shift implies that energy levels are formed by the manganese dopants in the band gap of the InZnP quantum dot, a host material, so that the energy levels induced recombination of the excitons.

Also, it is observed that the manganese-doped InZnP quantum dots of the Examples have narrower FWHM values than the undoped InZnP quantum dot of the Comparative Example. To be more specific, the FWHM of the final manganese-doped InZnP quantum dot of the Example is 92 nm while the FWHM of the undoped InZnP quantum dot of the Comparative Example is 133 nm. That is, the FWHM of the manganese-doped InZnP quantum dot of the Example is reduced by 30% compared with the FWHM of the undoped InZnP quantum dot of the Comparative Example.

Table 1 summarizes the PL peaks, the FWHM values, and quantum yields (QY) of the quantum dots according to the Comparative Example and the Examples.

**Table 1]**

| | Wavelength of photoluminescence (PL) peak | Full width at half maximum (FWHM) | quantum yield (QY) |
|---|---|---|---|
| InP | 607 nm | 133 nm | 22 % |
| Mn:lnP @200°C | 611 nm | 124 nm | 26 % |
| Mn:lnP @250°C | 629 nm | 101 nm | 21 % |
| Mn:InP @310°C | 672 nm | 92 nm | 32 % |

It is observed, in Table 1, that the manganese-doped InZnP quantum dots according to the Examples revel enhanced quantum yields compared with the undoped InZnP quantum dot according to the Comparative Example. Also, it is found that the quantum yields does not decrease but maintains a level of 21-32% during the synthesis of the manganese-doped InZnP quantum dots of the Example.

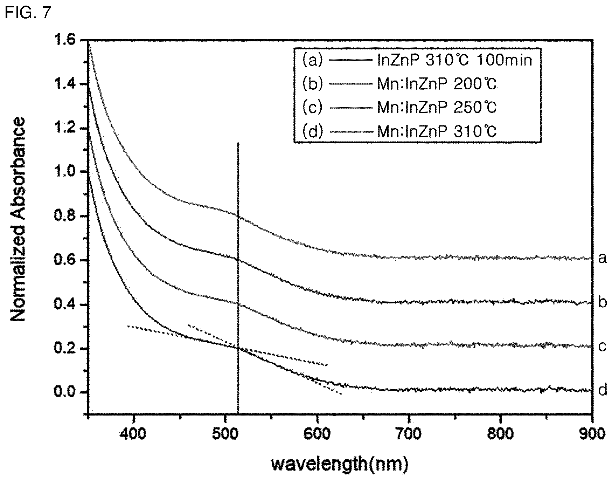

FIG. 6 is a graph illustrating the PL peaks of the InZnP quantum dots according to the Examples and a Comparative Example obtained during manufacturing stages of the InZnP quantum dots. FIG. 7 is a graph illustrating ultraviolet (UV) absorptions of the InZnP quantum dots according to the Examples and a Comparative Example obtained during manufacturing stages of the InZnP quantum dots.

As described above, the PL peak of the manganese-doped InZnP quantum dot of the Example is red shifted due to the doping of manganese, which is also shown in FIG. 6.

However, it is observed in FIG. 7 that a first excitonic absorption peak is not moved but is maintained in the UV absorption of the manganese-doped InZnP quantum dot according to the Example. This implies that there is no change in a particle size distribution of the InZnP quantum dot which is the host material of the manganese-doped InZnP quantum dot according to the Example. Considering such no change in the particle size distribution along with the red shift of the PL peak and the change in the FWHM which implies the formation of the manganese dopant levels in the manganese-doped InZnP quantum dot, it can be concluded that a manganese layer is not formed on the surface of the InZnP quantum dot, the host material, but the manganese is doped inside the InZnP quantum dot in the manganese-doped InZnP quantum dot according to the Example.

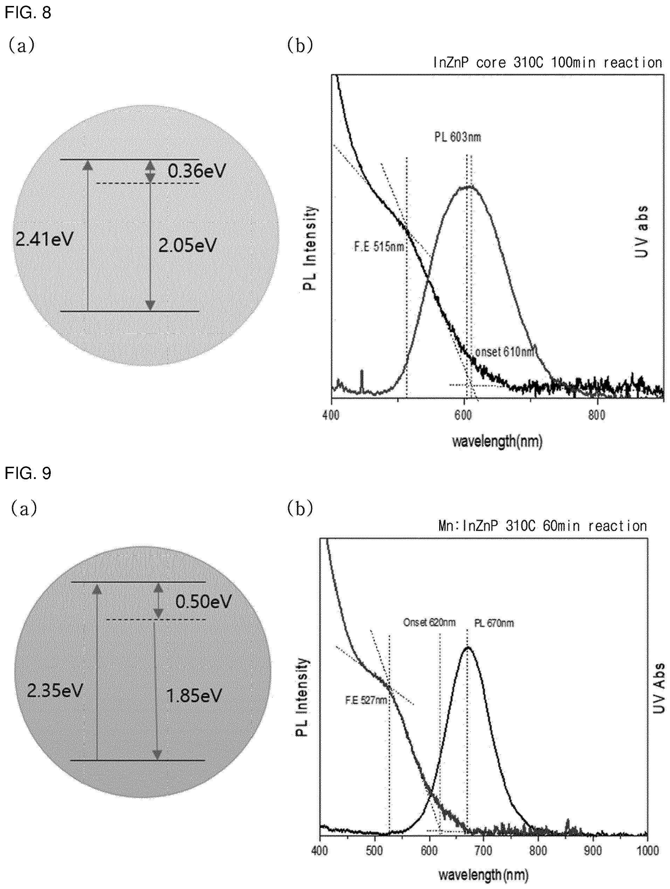

Stroke shifts of the quantum dots according to Comparative Example and the Example are shown in FIGS. 8 and 9. FIG. 8 is a graph illustrating the stroke shift of the undoped InZnP quantum dot according to the Comparative Example. FIG. 9 is a graph illustrating the stroke shift of the manganese-doped InZnP quantum dot according to the Example.

The stroke shift was calculated as an energy difference between an energy of the first excitonic peak and an energy of a PL maximum peak.

In the undoped InZnP quantum dot according to the Comparative Example, the energy of the first excitonic peak was 2.41 eV, and the energy of the PL maximum peak was 2.05 eV. Thus, the stroke shift of the undoped InZnP quantum dot according to the Comparative Example was calculated to be 360 meV.

In the manganese-doped InZnP quantum dot according to the Example, the energy of the first excitonic peak was 2.35 eV, and the energy of the PL maximum peak was 1.85 eV. Thus, the stroke shift of the manganese-doped InZnP quantum dot according to the Example was calculated to be 500 meV.

That is, the manganese-doped InZnP quantum dot according to the Example reveals the stroke shift widened by 140 meV compared with the undoped InZnP quantum dot according to the Comparative Example. Such an increase in the stroke shift suppresses self-quenching of the quantum dot material, thereby increasing the quantum yield.

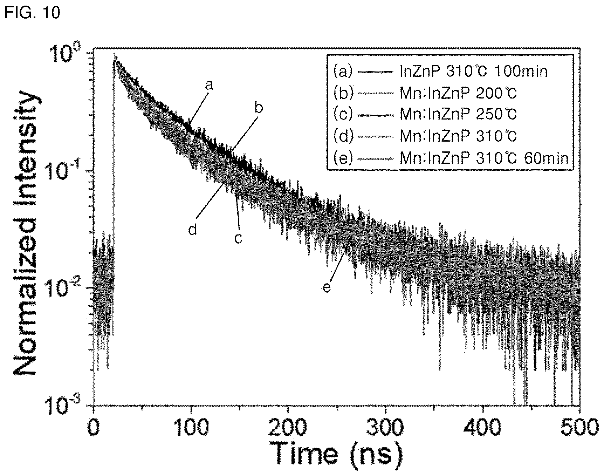

In order to check whether manganese was doped correctly in the manganese-doped InZnP quantum dot according to the Example, a PL decay time was measured by using time-resolved photoluminescence (TRPL), of which the measurement results are shown in FIG. 10. FIG. 10 is a graph illustrating PL decay curves of the manganese-doped InZnP quantum dots according to the Examples.

Referring to FIG. 10, a fast electron deactivation is found at 100 ns in the PL decay curve. This implies that electrons in the manganese-doped InZnP quantum dots according to the Example move very quickly to the manganese dopant levels. Thus, it can be concluded that manganese was doped correctly in the manganese-doped InZnP quantum dot according to the Example.

The description of the disclosure is merely exemplary in nature and, thus, variations that do not depart from the substance of the disclosure are intended to be within the scope of the disclosure. Such variations are not to be regarded as a departure from the spirit and scope of the disclosure.

## Claims

1. A manganese-doped InZnP quantum dot, comprising:
an InZnP quantum dot synthesized by a reaction of indium acetate, zinc acetate, and tris(trimethylsilyl)phosphine,
wherein the InZnP quantum dot is doped with manganese to increase an optical efficiency.

2. The manganese-doped InZnP quantum dot as claimed in claim 1, wherein a doping ratio of manganese to the InZnP quantum dot is 0.1-20 wt%.

3. The manganese-doped InZnP quantum dot as claimed in claim 1, wherein a stroke shift is wider than a undoped InZnP quantum dot.

4. The manganese-doped InZnP quantum dot as claimed in claim 1, wherein a photoluminescence peak wavelength is larger than a undoped InZnP quantum dot.

5. The manganese-doped InZnP quantum dot as claimed in claim 1, wherein a full width at half maximum (FWHM) is smaller than a undoped InZnP quantum dot.

6. The manganese-doped InZnP quantum dot as claimed in claim 1, wherein the InZnP quantum dot is synthesized by:
putting indium acetate and zinc acetate into a reactor and heating the reactor, and
injecting a mixture of tris(trimethylsilyl)phosphine and 1-octadecene into the reactor.

7. The manganese-doped InZnP quantum dot as claimed in claim 1, wherein the InZnP quantum dot is doped with manganese by injecting manganese oleate into a reactor containing the InZnP quantum dot by one-pot reaction, gradually increasing a temperature, and maintaining the temperature for a predetermined time period to enhance a reproducibility of the manganese-doped InZnP quantum dot.

8. A method of manufacturing manganese-doped InZnP quantum dot, comprising:
synthesizing an InZnP quantum dot by reacting indium acetate, zinc acetate, and tris(trimethylsilyl)phosphine; and
doping the InZnP quantum dot with manganese.

9. The of manufacturing manganese-doped InZnP quantum dot as claimed in claim 8, wherein the synthesizing of the InZnP quantum dot comprises:
putting indium acetate and zinc acetate into a reactor and heating the reactor; and
injecting a mixture of tris(trimethylsilyl)phosphine and 1-octadecene into the reactor to synthesize the manganese-doped InZnP quantum dot.

10. The of manufacturing manganese-doped InZnP quantum dot as claimed in claim 9, wherein the synthesizing of the InZnP quantum dot comprises:
putting indium acetate, zinc acetate, and oleic acid into a reactor and heating the reactor under a vacuum condition;
injecting 1-octadecene into the reactor and heating the reactor;
changing an atmosphere of the reactor into nitrogen and heating the reactor; and
injecting the mixture of tris(trimethylsilyl)phosphine and 1-octadecene into the reactor.

11. The of manufacturing manganese-doped InZnP quantum dot as claimed in claim 9, wherein the doping of the InZnP quantum dot with manganese comprises:
adding manganese oleate to the InZnP quantum dot by one-pot reaction; and
changing a temperature condition to enhance a reproducibility of the doping.

12. The of manufacturing manganese-doped InZnP quantum dot as claimed in claim 11, wherein, in the doping of the InZnP quantum dot with manganese, the temperature is increased gradually and then maintained for a predetermined time period.
